# EUROPEAN PATENT APPLICATION

(11) **EP 4 806 529 A1**
(43) Date of publication of application: **16.09.2026**
(21) Application number: 26163895.1
(22) Date of filing: 11.03.2026
(51) Int. Cl.: A63F 13/355, A63F 13/358, A63F 13/67

(54) **VIDEO IMAGE RENDERING BASED ON MOTION VECTOR PREDICTION**

(30) Priority: 11.03.2025 GB 202503532
(71) Applicant: Sony Interactive Entertainment Europe Limited, London W1F 7LP (GB)
(72) Inventor: MOTILLA, Daniel Montero, London, W1F 7LP (GB); HUME, Oliver George, London, W1F 7LP (GB)
(74) Representative: Fish & Richardson P.C.

(57) **Abstract**

A computer implemented method of generating updated video data for use in a computer game is disclosed. The method comprises partially rendering (S17) an updated video frame based on previous motion vectors and/or previous controller inputs (S16) and at least one existing frame of video data (S13). The method also comprises receiving (S18) real updated video data from a remote server, and completing (S19) rendering of the updated video frame.

## Description

The present disclosure relates to rendering of image data, and relates particularly, but not exclusively, to rendering of video image data in a cloud computer gaming apparatus.

In cloud computer gaming, a user apparatus receives data from a server, located remotely from the user apparatus, via a cloud such as the internet, and renders video image data of a computer game on a display connected to the user apparatus based on the data received from the server. The remote server updates the state of the computer game based on inputs from a controller used by a player of the game located at the user apparatus, wherein the user inputs are transmitted to the remote server by the client apparatus. The video image data rendered at the user apparatus is then updated on the basis of motion vector data received from the remote server indicating movement of various features within a scene depicted by the frames of video data.

Known cloud gaming apparatus suffers from the drawback that latency between the user apparatus and the remote server can cause delays in updating rendered video image data at the user apparatus, which in turn can negatively affect efficient operation of the video game.

Preferred embodiments of the disclosure seek to overcome one or more of the above disadvantages.

According to an aspect of the disclosure, there is provided a computer implemented method of generating video data for use in a computer game, the method comprising:
generating first data based on second data and third data, wherein the second data represents at least one input signal from a user of the computer game and the third data represents at least one existing frame of video data of the computer game, and wherein the first data represents at least part of at least one estimated updated said frame of said video data;
receiving fourth data from a remote device, wherein the fourth data is useable to generate at least one updated said frame of said video data; and
generating, based on said first data and said fourth data, at least one updated frame of said video data.

By generating first data, representing at least part of at least one estimated updated frame of video data, based on second data representing at least one input signal from a user of the computer game and third data representing at least one existing frame of video data of the computer game, and then generating an updated frame of video data based on the first data and fourth data received from the remote device, this provides the advantage that the user apparatus can begin rendering the next frame of video data before the updated video data is actually received from the remote device. This in turn enables latency on the user apparatus to be reduced, thereby reducing wait time and making the computer game feel more responsive to a user.

At least one said input signal may control a position, of at least one character in the computer game, in a scene represented by at least one said frame of said video data.

The step of generating said first data may include generating at least part of at least one estimated updated said frame of said video data on the basis of a plurality of temporally separated said input signals.

At least part of at least one estimated updated said frame of said video data may be based on extrapolation of the represented position of said character in a plurality of existing said frames of said video data.

This provides the advantage of enabling the position of characters within a game to be predicted, thereby enabling more accurate estimation of the estimated updated video frame before the actual frame update data is received from the remote device.

The third data may represent changes of respective position, between at least one pair of consecutive said frames of said video data, of at least one feature of the computer game represented by said video data.

This provides the advantage of enabling more accurate prediction of the position of features of the computer game so that the estimated updated frame can be more accurately rendered before the actual video update data is received from the remote device.

The third data may include at least one respective motion vector of a said frame of said video data.

At least part of at least one estimated updated frame of said video data may be based on extrapolation of the represented position of at least one said feature in a plurality of existing said frames of said video data.

The fourth data may represent differences between consecutive said frames of said video data.

The number of frames used to generate said first data may be dependent on a degree of latency between said remote device and the user apparatus on which the method is executed.

The method may be executed in response to detection of a threshold value of said latency.

The first data may be further based on fifth data representing a plurality of possible outcomes based on previous values of said second data and said third data.

This provides the advantage of enabling the first data to be determined more rapidly and/or by means of lower processing power.

The fifth data may represent respective probabilities of a plurality of said possible outcomes.

The possible outcomes may include possible actions performed by at least one user.

The fifth data may be determined from previous values of said second data and said third data by means of at least one neural network.

This provides the advantage of providing greater flexibility and/or adaptability.

According to another aspect of the disclosure, there is provided a computer program product including one or more executable instructions which, when executed by a computer, causes the computer to carry out the method as defined above.

According to a further aspect of the disclosure, there is provided a system comprising a display apparatus and computing device comprising a processor and a memory, wherein the system is configured to carry out the method as defined above.

Embodiments of the disclosure will now be disclosed by way of example only, and not in any limitative sense, with reference to the accompanying drawings, in which:-
Figure 1 shows schematically an example of a cloud gaming system of an embodiment of the present disclosure;
Figure 2 shows a flow diagram of a method of an embodiment of the present disclosure; and
Figure 3 illustrates a block diagram of one example implementation of a computing device for use in implementing an embodiment of the disclosure.

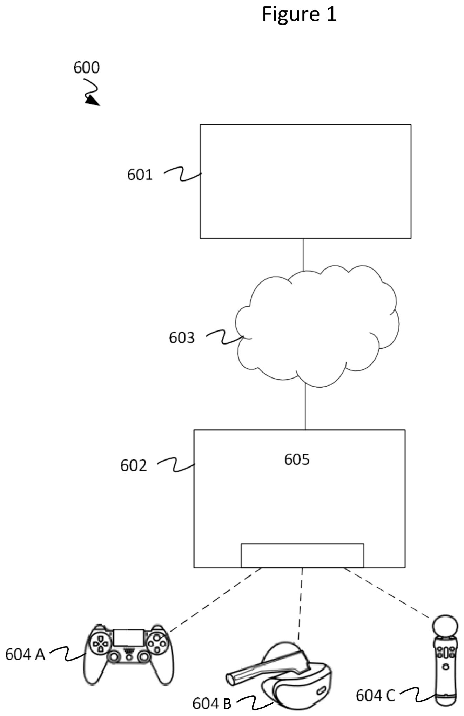

Figure 1 shows schematically an example of a cloud gaming system 600 that may be used in accordance with the present disclosure. **In** Figure 1, the cloud gaming system 600 is shown as comprising a server 601 that is in communication with a client device 602, having a display screen, via a communications network 603. The server 601 is configured to perform at least some of the rendering of an image.

The client device 602 may include, e.g. a video game playing device (games console), a smart TV, a set-top box, a smartphone, laptop, personal computer (PC), USB-streaming device, etc. The client device 602 may receive e.g. video frames from the server 601, via the communications network 603. In some examples, the client device 601 may receive image data from the server 601 and perform further processing on that image data. The client device may further comprise a VR/AR headset.

In Figure 1, the client device 602 is shown as being associated with a plurality of input devices 604A, 604B (headset), 604C (controller). It will be appreciated that the input devices 604A, 604B, 604C shown are merely illustrative examples and that a different number of, and / or different types of input devices may be provided. The input devices are in communication with the client device via a wired or wireless connection. In Figure 1, the client device 602 is shown as comprising a communication interface 605 for receiving user inputs generated at or via the input devices. It will be further appreciated that in some examples, user inputs may be generated at the client device 602 and not necessarily with a separate, standalone input device.

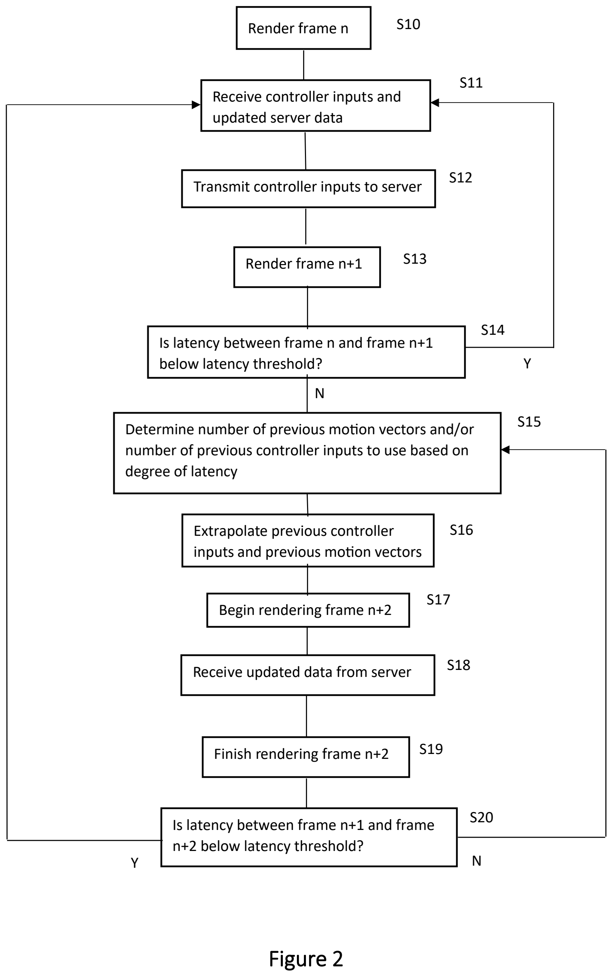

Referring to Figure 2, a flow diagram for updating video image data rendered on a display by the client device 602 of Figure 1 is shown. At step S10, frame n of video data is rendered on a display of the client device 602. At step S11, updated video data including motion vector data is received from the remote server 601, and input data is received from the controller 604 connected to the client device 602. The input data from the controller is transmitted to the remote server 601 at step S12 to enable the state of the game to be updated by the server 601 and updated motion vector data to be generated in order to update the video image data to enable rendering of the next video frame, frame n + 1, in step S13. At step S14, it is determined whether the degree of latency between frame n and frame n+1 is less than a predetermined latency threshold value. If the degree of latency is less than the threshold value, the process returns to step S11 and the frames of video image data are continually updated on the basis of motion vector data received from the remote server 601.

If, on the other hand, the latency detected at step S14 is not less than the latency threshold value, a determination is made at step S15, based on the degree of latency between frame n and frame n + 1, of the number of previous motion vectors and/or number of previous controller inputs to use in an extrapolation carried out at step S16 on the basis of previous motion vectors and previous inputs received from the controller, in order to predict the likely movement of a character in a scene of the computer game depicted by the video data. For example, if the character represents the user of the game and the user is detected as moving forwards in the previous inputs from the controller, then it is likely that the user will continue to move forwards, and the likely forward movement of the user can be predicted by the client device 602. At step S16, the extrapolation is made on the basis of previous motion vectors received from the remote server 601 and previous inputs from the controller of the client device 602, in order to predict how the video image frame is likely to change. An additional input for the prediction carried out in step S16 is based on a database that stores the probabilities of the user performing a specific action, such as heading towards a specific direction when it reaches a specific game state, based on previously collected game plays from users, for example "when the user reaches this specific map location, in 90% of the cases the user moves to the left, while in 10% of the cases the user moves to the right". The prediction in step S16 of the frame change based on previous motion vectors, controller inputs and past behaviour of other players can be achieved by capturing those predictive elements and the corresponding frame changes from previous game plays to train a neural network that learns the mapping between inputs and frame changes based on the collected examples.

At step S17, the client device 602 then begins to render the next video frame, frame n+2, before real updated video data is received from the remote server 601 in step S18. On the basis of the partial but early rendering in step S17, and the real data received in step S18, rendering of updated video frame n+2 is completed in step S19.

At step S20, a determination is made whether the latency between frame n+1 and frame n+2 is below the latency threshold value. **If** the latency is not below the threshold value, the process returns to step S15, and the video data is partially updated by the client device 602 on the basis of extrapolations based on previous motion vectors and previous inputs from the controller until updated real data is received from the remote server 601. If, on the other hand, the latency is below the threshold at step S20, the process returns to step S11, and the video frames are updated solely on the basis of real data received from the remote server 601.

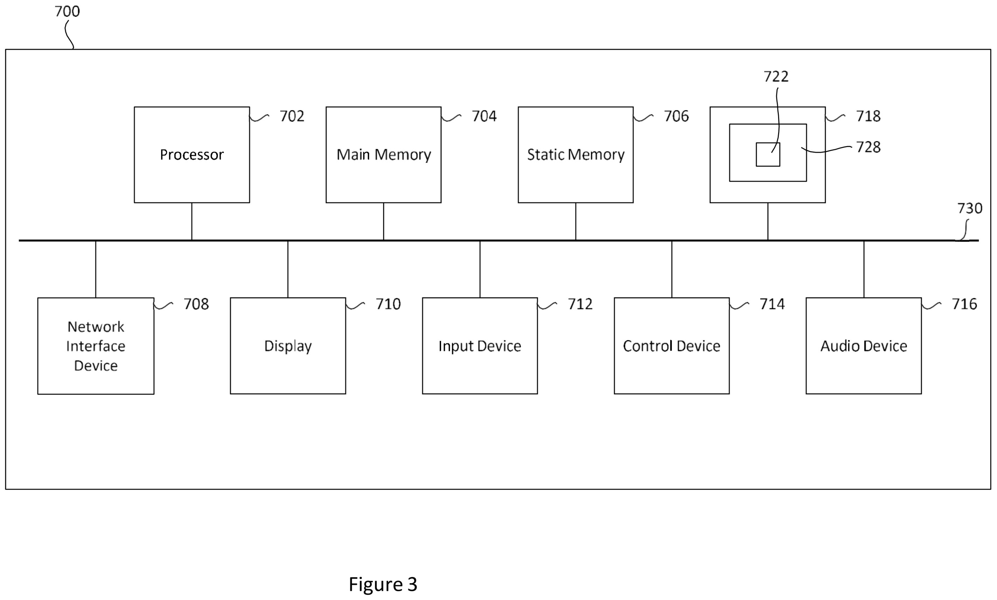

Figure 3 illustrates a block diagram of one example implementation of a computing device 700 that can be used for implementing the steps indicated in Figure 2 and explained throughout the detailed description.

The computing device is associated with executable instructions for causing the computing device to perform any one or more of the methodologies discussed herein. The computing device 700 may operate in the capacity of the client device 602 for carrying out the methods of the present disclosure.

The example computing device 700 includes a processing device 702, a main memory 704 (e.g., read-only memory (ROM), flash memory, dynamic random-access memory (DRAM) such as synchronous DRAM (SDRAM) or Rambus DRAM (RDRAM), etc.), a static memory 706 (e.g., flash memory, static random-access memory (SRAM), etc.), and a secondary memory (e.g., a data storage device 718), which communicate with each other via a bus 730.

Processing device 702 represents one or more general-purpose processors such as a microprocessor, central processing unit, or the like. More particularly, the processing device 702 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 702 may also be one or more special-purpose processing devices such as an application specific integrated circuit (ASIC), a field programmable gate array (FPGA), a digital signal processor (DSP), network processor, or the like. Processing device 702 is configured to execute the processing logic (instructions 722) for performing the operations and steps discussed herein.

The computing device 700 may further include a network interface device 708. The computing device 700 also may include a video display unit 710 (e.g., a light emitting diode (LED) display, a liquid crystal display (LCD) or a cathode ray tube (CRT)), an alphanumeric input device 712 (e.g., a keyboard or touchscreen), a cursor control device 714 (e.g., a mouse or touchscreen), and an audio device 716 (e.g., a speaker).

The data storage device 718 may include one or more machine-readable storage media (or more specifically one or more non-transitory computer-readable storage media) 728 on which is stored one or more sets of instructions 722 embodying any one or more of the methodologies or functions described herein. The instructions 722 may also reside, completely or at least partially, within the main memory 704 and/or within the processing device 702 during execution thereof by the computer system 700, the main memory 704 and the processing device 702 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilising terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the disclosure has been described with reference to specific example implementations, it will be recognised that the disclosure is not limited to the implementations described but can be practiced with modification and alteration within the scope of the appended claims. Accordingly, the specification and drawings are to be regarded in an illustrative sense rather than a restrictive sense. The scope of the disclosure should, therefore, be determined with reference to the appended claims.

### Enumerated clauses

The following enumerated clauses aid a better understanding of the present disclosure and are not to be taken as limiting in any way.
1. A computer implemented method of generating video data for use in a computer game, the method comprising:
   generating first data based on second data and third data, wherein the second data represents at least one input signal from a user of the computer game and the third data represents at least one existing frame of video data of the computer game, and wherein the first data represents at least part of at least one estimated updated said frame of said video data;
   receiving fourth data from a remote device, wherein the fourth data is useable to generate at least one updated said frame of said video data; and
   generating, based on said first data and said fourth data, at least one updated frame of said video data.
2. The method of clause 1, wherein at least one said input signal controls a position, of at least one character in the computer game, in a scene represented by at least one said frame of said video data.
3. The method of clause 1 or 2, wherein the step of generating said first data includes generating at least part of at least one estimated updated said frame of said video data on the basis of a plurality of temporally separated said input signals.
4. The method of clause 3, wherein at least part of at least one estimated updated said frame of said video data is based on extrapolation of the represented position of said character in a plurality of existing said frames of said video data.
5. The method of any one of the preceding clauses, wherein the third data represents changes of respective position, between at least one pair of consecutive said frames of said video data, of at least one feature of the computer game represented by said video data.
6. The method of clause 5, wherein the third data includes at least one respective motion vector of a said frame of said video data.
7. The method of clause 5 or 6, wherein at least part of at least one estimated updated frame of said video data is based on extrapolation of the represented position of at least one said feature in a plurality of existing said frames of said video data.
8. The method of any one of the preceding clauses, wherein the fourth data represents differences between consecutive said frames of said video data.
9. The method of any one of the preceding clauses, wherein the number of frames used to generate said first data is dependent on a degree of latency between said remote device and the user apparatus on which the method is executed.
10. The method of clause 9, wherein the method is executed in response to detection of a threshold value of said latency.
11. The method of any one of the preceding clauses, wherein said first data is further based on fifth data representing a plurality of possible outcomes based on previous values of said second data and said third data.
12. The method of clause 11, wherein said fifth data represents respective probabilities of a plurality of said possible outcomes.
13. The method of clause 11 or 12, wherein said possible outcomes include possible actions performed by at least one user.
14. The method of any one of clauses 11 to 13, wherein the fifth data is determined from previous values of said second data and said third data by means of at least one neural network.
15. A computer program product including one or more executable instructions which, when executed by a computer, causes the computer to carry out the method according to any one of the preceding clauses.
16. A system comprising a display apparatus and computing device comprising a processor and a memory, wherein the system is configured to carry out the method according to any one of clauses 1 to 14.

### EMBODIMENTS

Although the present invention is defined in the claims, it should be understood that the present invention can also (alternatively) be defined in accordance with the following embodiments:
1. A computer implemented method of generating video data for use in a computer game, the method comprising:
   generating first data based on second data and third data, wherein the second data represents at least one input signal from a user of the computer game and the third data represents at least one existing frame of video data of the computer game, and wherein the first data represents at least part of at least one estimated updated said frame of said video data;
   receiving fourth data from a remote device, wherein the fourth data is useable to generate at least one updated said frame of said video data; and
   generating, based on said first data and said fourth data, at least one updated frame of said video data.
2. The method of embodiment 1, wherein at least one said input signal controls a position, of at least one character in the computer game, in a scene represented by at least one said frame of said video data.
3. The method of embodiment 1 or 2, wherein the step of generating said first data includes generating at least part of at least one estimated updated said frame of said video data on the basis of a plurality of temporally separated said input signals.
4. The method of embodiment 3, wherein at least part of at least one estimated updated said frame of said video data is based on extrapolation of the represented position of said character in a plurality of existing said frames of said video data.
5. The method of any one of the preceding embodiments, wherein the third data represents changes of respective position, between at least one pair of consecutive said frames of said video data, of at least one feature of the computer game represented by said video data.
6. The method of embodiment 5, wherein the third data includes at least one respective motion vector of a said frame of said video data.
7. The method of embodiment 5 or 6, wherein at least part of at least one estimated updated frame of said video data is based on extrapolation of the represented position of at least one said feature in a plurality of existing said frames of said video data.
8. The method of any one of the preceding embodiments, wherein the fourth data represents differences between consecutive said frames of said video data.
9. The method of any one of the preceding embodiments, wherein the number of frames used to generate said first data is dependent on a degree of latency between said remote device and the user apparatus on which the method is executed.
10. The method of embodiment 9, wherein the method is executed in response to detection of a threshold value of said latency.
11. The method of any one of the preceding embodiments, wherein said first data is further based on fifth data representing a plurality of possible outcomes based on previous values of said second data and said third data.
12. The method of embodiment 11, wherein said fifth data represents respective probabilities of a plurality of said possible outcomes.
13. The method of embodiment 11 or 12, wherein said possible outcomes include possible actions performed by at least one user.
14. The method of any one of embodiments 11 to 13, wherein the fifth data is determined from previous values of said second data and said third data by means of at least one neural network.
15. A computer program product including one or more executable instructions which, when executed by a computer, causes the computer to carry out the method according to any one of the preceding embodiments.
16. A system comprising a display apparatus and computing device comprising a processor and a memory, wherein the system is configured to carry out the method according to any one of embodiments 1 to 14.

## Claims

1. A computer implemented method for generating video data for use in a computer game, the method comprising:
generating first data based on second data and third data, wherein the second data represents at least one input signal from a user of the computer game and the third data represents at least one existing frame of video data of the computer game, and wherein the first data represents at least part of at least one estimated updated frame of the video data;
receiving fourth data from a remote device (601), wherein the fourth data is useable to generate at least one updated frame of the video data; and
generating, based on the first data and the fourth data, at least one updated frame of the video data.

2. The method of claim 1, wherein the at least one input signal controls, in a scene represented by the at least one frame of the video data, a position of at least one character in the computer game.

3. The method of claim 1 or 2, wherein the step of generating the first data includes generating the at least part of the at least one estimated updated frame of the video data on the basis of a plurality of temporally separated input signals.

4. The method of claim 3, wherein the at least part of the at least one estimated updated frame of the video data is based on extrapolation (S16) of a represented position of the at least one character in a plurality of existing frames of the video data.

5. The method of any one of the preceding claims, wherein the third data represents changes of a respective position, between at least one pair of consecutive frames of the video data, of at least one feature of the computer game represented by the video data, optionally wherein the third data includes at least one respective motion vector of a frame of the video data.

6. The method of claim 5, wherein at least part of at least one estimated updated frame of the video data is based on extrapolation (S16) of a represented position of at least one feature in a plurality of existing frames of the video data.

7. The method of any one of the preceding claims, wherein the fourth data represents differences between consecutive frames of the video data.

8. The method of any one of the preceding claims, wherein a number of frames used to generate the first data is dependent on a degree of latency between the remote device (601) and a user apparatus (605) on which the method is executed.

9. The method of claim 8, wherein the method is executed in response to detection (S15) of a threshold value of latency.

10. The method of any one of the preceding claims, wherein the first data is further based on fifth data representing a plurality of possible outcomes based on previous values of the second data and the third data.

11. The method of claim 10, wherein the fifth data represents respective probabilities of a plurality of the possible outcomes.

12. The method of claim 10 or 11, wherein the possible outcomes include possible actions performed by at least one user.

13. The method of any one of claims 10 to 12, wherein the fifth data is determined from previous values of the second data and the third data by means of at least one neural network.

14. A computer program product including one or more executable instructions which, when executed by a computer (702), cause the computer (702) to carry out the method according to any one of the preceding claims.

15. A system (700) comprising:
a display apparatus (710); and
a computing device; the computing device comprising a processor (702) and a memory (704); wherein the system (700) is configured to carry out the method according to any one of claims 1 to 13.
